# EUROPEAN PATENT APPLICATION

(11) **EP 1 110 918 A2**
(43) Date of publication of application: **27.06.2001**
(21) Application number: 00128454.6
(22) Date of filing: 22.12.2000
(51) Int. Cl.: C03B 19/12, C03B 19/14, C03B 37/014

(54) **Apparatus and method for sintering an over-jacketing sol-gel derived glass tube for an optical fiber preform**

(30) Priority: 22.12.1999 KR 9960249
(71) Applicant: SAMSUNG ELECTRONICS CO., LTD., Suwon-City, Kyungki-do (KR)
(72) Inventor: Yoon, Young-Sik, Kyongsangbuk-do (KR); Baik, Young-Min, Kumi-shi, Kyongsangbukdo (KR)
(74) Representative: Grünecker, Kinkeldey, Stockmair & Schwanhäusser Anwaltssozietät

(57) **Abstract**

Disclosed is an apparatus and a method for sintering an over-jacketing tube in a zone sintering phase of an optical fiber preform fabrication process using a sol-gel process. The sintering apparatus includes: a processing tube materialized of quartz; a gel tube assembly including a top rotation cap positioned at a top of the processing tube for sealing an inside of the processing tube and rotating at a regular peripheral velocity, a ceramic pin elongated downward from the axis of the rotation cap, and a gel tube suspended from a bottom of the ceramic pin and disposed on a same axle within the processing tube; and a movable furnace initially positioned at a bottom of the processing tube and moving upward along the processing tube for thermally processing the gel tube after the gel tube assembly is inserted into the processing tube. Therefore, the present invention improves an equipment accuracy, and hence achieves an easer maintenance.

## Description

### BACKGROUND OF THE INVENTION

### 1. Field of the Invention

The present invention relates generally to a sintering apparatus and a method thereof for fabricating a silica-based glass as a second optical fiber preform in an optical fiber preform fabrication process, and in particular, to a sintering apparatus and a method thereof for fabricating a transparent substrate tube or an over-jacketing tube in a zone-sintering phase of a sol-gel process.

### 2. Description of the Related Art

In general, a silica-based glass is transparent and chemically inert, and simultaneously has a superior property in a thermal stability and in a solidity, and a low thermal expansion. These valuable characteristics make the silica-based glass to be useful as an optical fiber preform.

A general optical fiber includes a core having a predetermined refractive index therein, and a cladding having a lower refractive index than that of the core for performing a total reflection of incident lights. A method for fabricating the optical fiber comprises the steps of fabricating an optical fiber preform, and drawing the optical fiber preform into a strand of optical fiber. Following the drawing step, the drawn optical fiber is coated to become a strand of optical fiber cable.

On the other hand, an over-cladding or an over-jacketing is performed to draw an optical fiber having a large length from the fabricated optical fiber preform. To be specific, the fabricated first optical fiber preform is over-clad or over-jacketed with a tubular second optical fiber, so as to accomplish an optical fiber preform having a large diameter. Here, a chemical vapor deposition or a sol-gel process is widely used as a method for fabricating the silica-based glass by using the second optical fiber preform, namely a fumed silica. Of the above methods, the chemical vapor deposition, in which a solid silica-based glass is fabricated by means of a vapor reaction, ends to have a low productivity. Further, according to the chemical vapor deposition, a high temperature is required for the fabrication process and thus a required equipment is costly, thereby increasing manufacturing costs. The sol-gel process, however, has advantages of achieving a high productivity because of its liquid process, and freely adjusting a component formation as well as being processed at a relatively low temperature, thereby being used an economical way. The sol-gel process has yet another advantage of using a material of a high degree of purity as its initial material, so as to be usefully employed for fabricating a silica-based glass of a high purity.

The sol-gel process for fabricating the silica-based glass by using the material of a high degree of purity is disclosed in U.S. Pat. No. 5,912,397 by Young-Min Baik, titled "High-purity silica glass fabrication method using sol-gel process", and in U.S. Pat. No. 5,919,280 by Jeong-Hyun Oh, titled "Method for fabrication silica glass".

In addition, in a sintering phase of the sol-gel process, an apparatus and a method for sintering a silica-based glass in a sintering furnace are disclosed in detail in U.S. Pat. 5,423,898, titled "Method of lowering and raising an optical fiber preform in a sintering furnace". An apparatus for fabricating a transparent silica-based glass preform disclosed in the U.S. Pat. No. 5423898 by Masami Terashima, et al. includes a fixed furnace body, a furnace tube and a porous silica glass body longitudinally moved along the furnace tube.

However, the U.S. Pat. No. 5,423,898, in which the furnace and the furnace tube are fixed and the transparent silica-based glass is vertically movable, has the following problems.

Among components of the sintering device, the furnace and the furnace tube are fixed, the silica-based glass is moved along the furnace tube and around the furnace, and the sintered glass should be drawn out. Thus, an equipment, especially a sintering tower, a height of which reaches almost 10m, is very difficult to maintain its accuracy. Further, manufacturing costs of the equipments tend to increase in order to maintain a high accuracy. Still further, a height of a factory zenith is determined depending on the height of the equipments, and hence maintaining and usage costs are increased, resulting in a rise of the production cost.

### SUMMARY OF THE INVENTION

It is, therefore, an object of the present invention to provide an apparatus and a method for sintering an over-jacketing tube, in which a height of a sintering tower, among equipments, is lowered as compared with the conventional art, so as to easily maintain a high accuracy.

It is another object of the present invention to provide an apparatus and a method for sintering an over-jacketing tube, in which a manufacturing cost of a sintering tower among equipments is lowered as compared with the conventional art.

It is still another object of the present invention to provide an apparatus and a method for sintering an over-jacketing tube, in which maintaining and usage costs of a sintering tower, among equipments, are smaller as compared with the conventional art.

To achieve the above objects, there is provided an apparatus and a method for sintering an over-jacketing tube. The apparatus for sintering the over-jacketing tube including a tube, a gel tube disposed within the tube, and a furnace for thermally processing the gel tube, the apparatus comprises: a processing tube composed of quartz; a gel tube assembly including a top rotation cap positioned at a top of the processing tube, for sealing an inside of the processing tube and rotating at a regular peripheral velocity as well, a ceramic pin elongated downward from an axis of the top rotation cap, and a gel tube suspended from a bottom of the ceramic pin and disposed on a same axle within the processing tube; and a movable furnace initially disposed on a bottom of the processing tube, and moving upward along the processing tube after the gel tube assembly is inserted into the processing tube, so as to thermally process the gel tube.

The method for sintering the over-jacketing tube with an apparatus including a processing tube; a gel tube assembly having a top rotation cap and a prepared gel tube, from which a prepared gel tube is suspended, and disposed within the processing tube; and a furnace for thermally processing the gel tube, the method comprises the steps of: inserting the gel tube assembly into an axial bottom of the processing tube; injecting a helium gas into an inside of the processing tube; rotating the gel tube at a regular peripheral velocity; moving the furnace along the processing tube in a vertically upward direction and therefore thermally processing the gel tube; and stopping the injection of the helium gas as well as moving the furnace to its initial position at a high velocity after thermally processing the gel tube.

### BRIEF DESCRIPTION OF THE DRAWINGS

The above and other objects, features and advantages of the present invention will become more apparent from the following detailed description when taken in conjunction with the accompanying drawings, in which:
FIG. 1 is a view illustrating a construction of an apparatus for sintering an over-jacketing tube according to a preferred embodiment of the present invention; and
FIGs. 2a through 2f are views illustrating an order of fabricating an over-jacketing tube by using a sintering apparatus according to a preferred embodiment of the present invention.

### DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

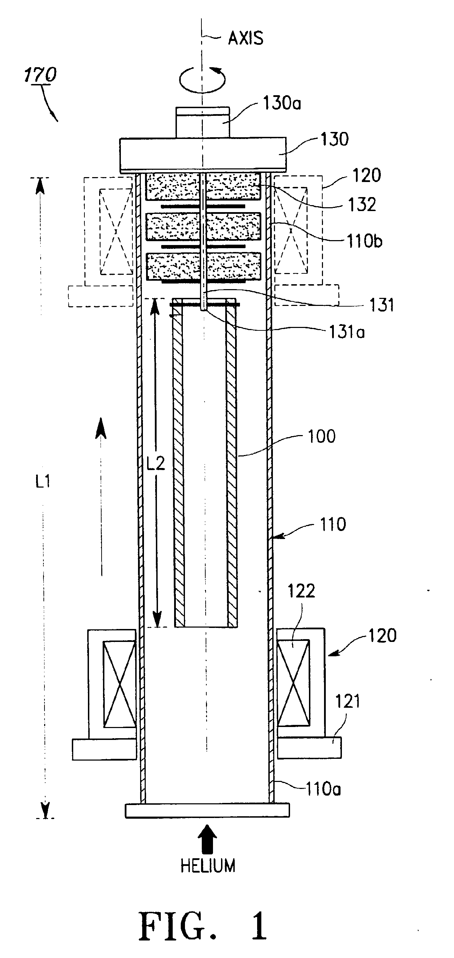

FIG. 1 is a view illustrating a construction of an apparatus for sintering an over-jacketing tube according to a preferred embodiment of the present invention. Referring to FIG. 1, the sintering apparatus 170 is introduced in a sintering phase of a sol-gel process. The sintering apparatus 170 is to sinter a silica-based glass, particularly a substrate tube or an over-jacketing tube. The sintering apparatus 170 sinters a gel tube 100 by inserting a gel tube 100, which is low-heat treated, into a processing tube 110, and moving a furnace 120 upward along the processing tube 110. The processing tube 110 is materialized of quartz and has a length of 2.8m or so. Further, the length of the gel tube 100 is about 1.3 to 1.5m, while the length of the over-jacketing tube after being sintered is a vicinity of 1m. Each internal and external diameter of the top and bottom of the gel tube are different from each other. The gel tube has a shape of becoming narrow as going up with its sloped angle of 2 degree. A tube low-heat treated prior to the sintering phase is herein below referred to as a gel tube 100, whereas a tube after the sintering phase is referred to as an over-jacketing tube.

A sintering apparatus 170 according to the present invention includes: a hollow processing tube 110 for sintering a low-heat treated gel tube 100; a top rotation cap for sealing a top of the processing tube 110 and rotating the suspended gel tube 100; and a furnace vertically moving along the processing tube 110. After the gel tube 100 is inserted into the processing tube 110, the gel tube 100 and the processing tube 110 are distanced from each other and arranged on a same axle. The furnace 120 includes a heater made of graphite.

The top rotation cap 130 rotates in an arrow direction at a lower velocity around the axis from which the gel tube 100 is suspended. The furnace 120 vertically moves in an arrow direction at a lower velocity for thermally processing the gel tube 100. An initial position (drawn with a thin line) of the furnace 120 is located on a bottom 110a of the processing tube , while a close position (drawn with a dotted line) of the gel tube 100 resulted after the gel tube 100 thermally processing phase is completed is located on a top 110b of the processing tube. When the gel tube 100 thermally processing phase is completed, the furnace 120 is returned to its initial position at a high velocity.

The top rotation cap 130 is located on the top of the processing tube 110 and rotated at a regular peripheral velocity by a monitor, which is not shown. The top rotation cap 130 and the top of the processing tube 110 include a ceramic rotation plate, which is not drawn in FIG. 1. The not-drawn ceramic rotation plate performs a sealing function. In other words, the ceramic rotation plate causes the top rotation cap 130 to rotate on the top of the processing tube 110.

The furnace 120 is positioned at a carriage 121 and makes a longitudinal upward movement. The gel tube 100 is suspended from the top rotation cap 130 by the ceramic pin 131, and installed on a bottom 131a of the ceramic pin 131. Further, one or more quartz insulation materials 132 are installed on the ceramic pin 131 in an upward direction. The quartz insulation material 132 blocks a heat applied to the furnace 120, as the furnace 120 moves in an arrow direction, and completely sinters the gel tube as well as reaching the state drawn with the dotted line.

The method for sintering the over-jacketing tube according to the present invention comprises: injecting a helium gas into an inside of the processing tube 110, so as to remove gas cavities in the gel tube 100; rotating the gel tube disposed within the processing tube 110 according to the rotation of the top rotation cap 130; and moving the furnace 120 upward and thermally processing the gel tube 100. Here, the furnace 120 thermally processes the gel tube 100 by once moving upward.

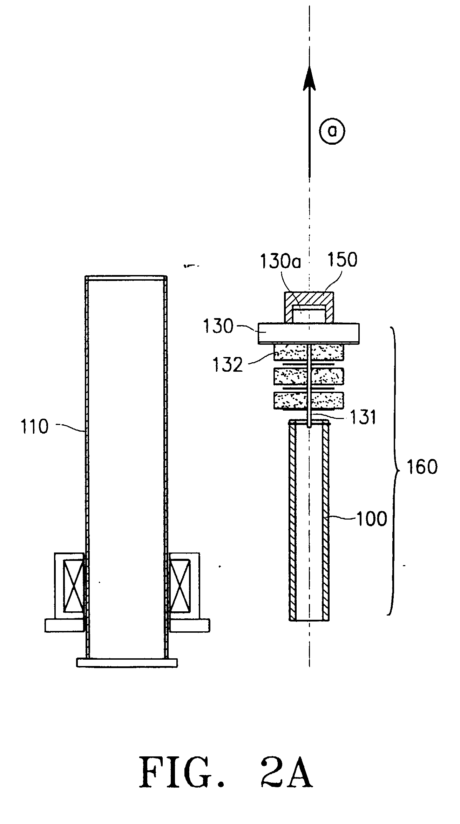

A method of sintering a gel tube according to the present invention will be described herein below with reference to FIGs. 2a through 2f. A processing tube or a holding device drawn in FIGs. 2a through 2f, is installed on a specific position of a sintering tower, which is not drawn. In addition, a sintering apparatus according to the present invention can be introduced in a process for fabricating a cylindrical optical fiber preform of a silica-based glass as well as a process for fabricating a tube materialized of the silica-based glass.

Referring to FIG. 2a, a gel tube assembly is prepared to include a previously low-heat treated gel tube 100 which is suspended from a top rotation cap 130. The gel tube assembly 160 includes the top rotation cap 130; a ceramic pin 131 installed on an axial bottom of the top rotation cap 130; a gel tube 100 suspended from a bottom of the ceramic pin 131; and one or more quartz insulation materials 132 installed between the top rotation cap 130 and the gel tube 100. As shown in FIG. 2a, three quartz insulation materials 132 are vertically positioned on the ceramic pin 131 with intervals. However, one or more quartz insulation materials 132 may be installed in the ceramic pin 131. The quartz insulation material 132 is of a circular disk shape.

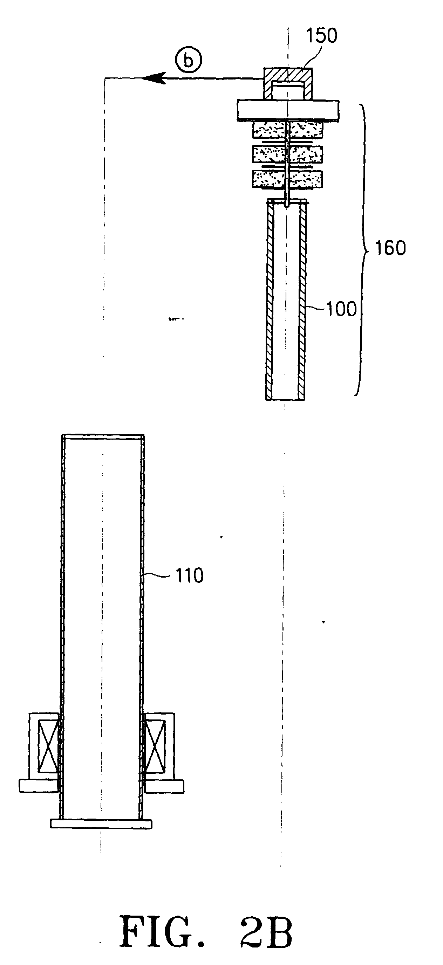

Following the phase of preparing the gel tube assembly 160, a top 130a of the top rotation cap 130 is connected to a vertically or horizontally movable holding unit 150, and then moved upward, or in an arrow direction ⓐ, by the vertically or horizontally movable holding unit 150. The movable holding unit 150 is driven by a hydraulic pressure cylinder, which is not drawn. The vertically upward moved gel tube assembly 160 is drawn in FIG. 2b.

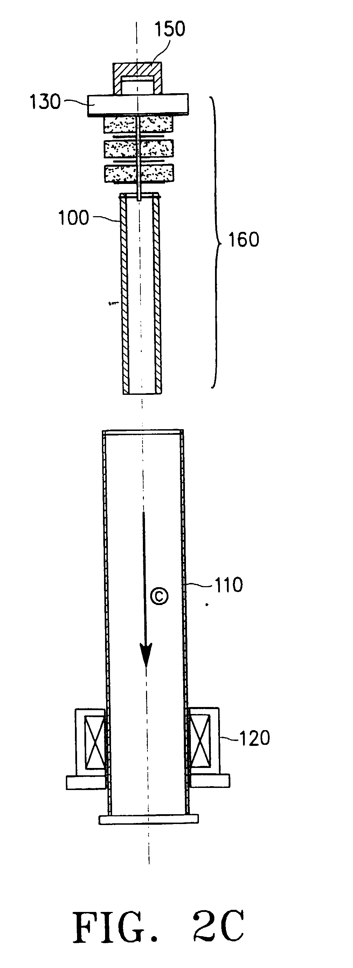

As shown in FIG. 2b, the gel assembly moved upward by the holding unit 150 is moved in an arrow direction ⓑ (horizontally), so as to be inserted into the processing tube 110. The holding unit 150 is vertically or horizontally movable. The axis of the gel tube 100 is horizontally moved by the holding unit 150, to a point at which the axis of the processing tube 110 is on the same axle therewith. The gel tube assembly 160 horizontally moved by the holding unit 150 is drawn in FIG. 2c.

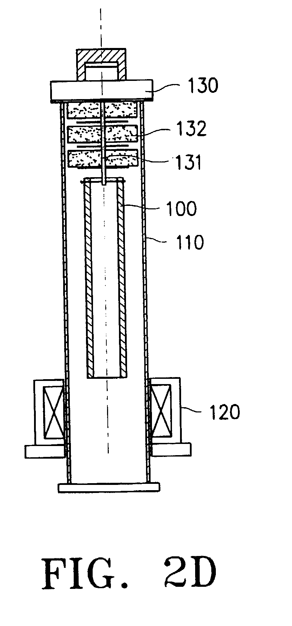

Referring to FIG. 2c, the gel tube horizontally moved while being suspended from the top rotation cap 130 is moved to a point at which it is on the same axle with the processing tube 110. The gel tube assembly 160 is moved in an arrow direction © by the holding unit 150, and completely inserted into the processing tube 110. The furnace 120 is located on the bottom of the processing tube 110. A view showing that the gel tube 100 is completely inserted into the processing tube 110 is drawn in FIG. 2d.

As shown in FIG. 2d, the furnace is disposed around the gel tube 100 inserted into the processing tube 110, and also positioned to surround the processing tube 110 in a bottom direction of the gel tube 100. The top rotation cap 130 is disposed on the top of the processing tube 110 for sealing the inside of the processing tube.

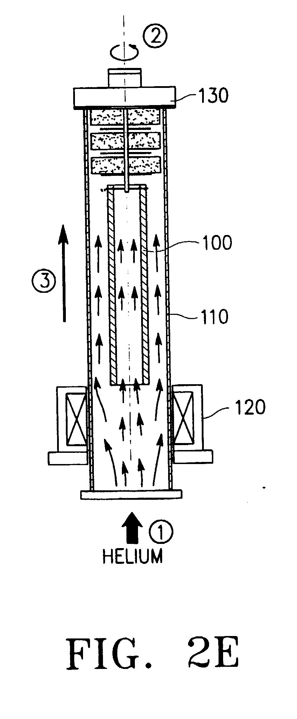

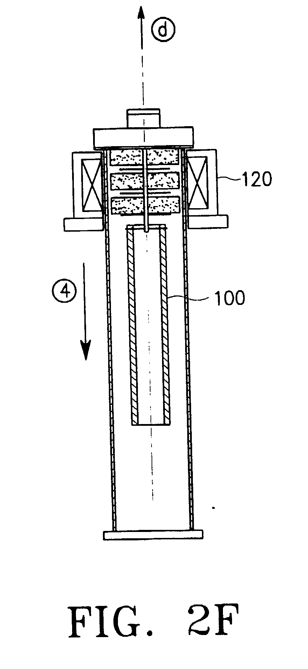

Then, as drawn in FIG. 2e, the gel tube assembly 160 is inserted into the inside of the processing tube 110, a helium gas is inserted into the inside of the processing tube 110 in a direction ① to eliminate gas cavities within the processing tube 110, and sequentially the top rotation cap 130 rotates in an arrow direction ②. The helium gas 100 is injected upward the processing tube. In other words, the helium gas flows from the bottom to the top. After the gel tube 100 rotates within the processing tube 110 at a regular peripheral velocity, the furnace 120 is moved upward (in an arrow direction ③) at a regular peripheral velocity. Here, a temperature for thermally processing the furnace 120 is 1450 degree C, and a reference velocity of proceeding the processing is 15 cm/hr. The furnace 120 heating temperature is elevated to 1400 degree C when it is initially elevated. When the furnace 120 reaches 1380 degree C, the furnace 120 is moved upward (in the arrow direction ③) at a velocity of 18 cm/hr. When the furnace 120 is elevated from 1380 degree C to 1450 degree C, the elevation velocity is 1 degree C/hr. Further, when the furnace reaches 1440 degree C, the proceeding velocity of the furnace 120 is changed into 15 cm/hr, completing the proceeding. The furnace 120 sinters the gel tube by thermally processing the same, and the sintering phase is competed as shown in FIG. 2f. To be specific, the sintering apparatus according to the present invention fabricates the gel tube as an over-jacketing tube 100. Here, the heat conducted to the furnace 120 is blocked by the quartz insulation materials 132 and unable to be injected into the top rotation cap 130.

After the gel tube 100 sintering phase is completed as shown in FIG. 2f, the furnace 120 is moved downward (in an arrow direction ④) at a high velocity of 500 mm/min, an injection of the helium gas is stopped, and the gel tube assembly is horizontally moved in an arrow direction ⓓ, becoming the same state as in FIG. 2c. Next, the gel tube assembly 160 is horizontally moved and becomes the same state as in FIG. 2b, whereas the gel tube assembly is also moved downward and hence becomes the same state as in FIG. 2a, thereby completing the process for sintering the over-jacketing tube. The thermally processing phase for sintering according to the present invention enables fabrication of an over-jacketing tube of 250 km, and a cross sectional area distribution according to its length is possibly (maximum value-minimum value)/average sectional area*100#5%.

While the invention has been shown and described with reference to a certain preferred embodiment thereof, it will be understood by those skilled in the art that various changes in form and details may be made therein without departing from the spirit and scope of the invention as defined by the appended claims. Especially, the thermally processing temperature and the proceeding velocity of the furnace are only certain examples, and therefore the present invention is not limited to them. Furthermore, according to the present invention, the thermally processing phase is proceeded with once vertical movement of the furnace. However, one or more reciprocations of the furnace are possible for the thermally processing. Accordingly, the thermally processing temperature and the proceeding velocity may be changed based on the variable.

As described above, according to the present invention, as the height of the equipments becomes lower, an easier maintenance of a high accuracy in the equipments can be achieved, serving to decrease the equipment manufacturing cost. In particular, the lower the height of the equipments is, the lower the height of the factory zenith is, thereby reducing the equipment maintaining and usage costs.

## Claims

1. An apparatus for sintering an over-jacketing tube having a tube, a gel tube disposed within the tube and a furnace for thermally processing the gel tube, the apparatus comprising:
a processing tube composed of quartz;
a gel tube assembly including a top rotation cap positioned at a top of the processing tube for sealing inside of the processing tube and rotating at a regular peripheral velocity, a ceramic pin elongated downward from an axis of the rotation cap, and a gel tube suspended from a bottom of the ceramic pin and disposed on a same axle within the processing tube; and
a movable furnace initially positioned at a bottom of the processing tube and moving upward along the processing tube for thermally processing the gel tube after the gel tube assembly is inserted into the processing tube.

2. The apparatus of claim 1, wherein the gel tube assembly further includes a cylindrical insulation material composed of quartz.

3. The apparatus of claim 2, wherein the ceramic pin disposed between the top rotation cap and the gel tube assembly includes the insulation material composed of quartz.

4. The apparatus of claim 3, further comprising one or more insulation materials composed of quartz along the ceramic pin with intervals in a vertical direction, etc.

5. The apparatus of claim 1, wherein a helium gas is injected upward into the inside of the processing tube from the bottom thereof for eliminating gas cavities in the suspended gel tube.

6. The apparatus of claim 1, wherein the furnace is moved once in a vertically upward direction along the processing tube for thermally processing the suspended gel tube.

7. A method for sintering an over-jacketing tube by means of a sintering apparatus including a processing tube, a gel tube assembly having a top rotation cap, from which a prepared gel tube is suspended, disposed within the processing tube, and a furnace for thermally processing the gel tube, the method comprising the steps of:
(a) inserting the gel tube assembly into the processing tube downwardly along an axis thereof;
(b) injecting a helium gas into the processing tube;
(c) rotating the gel tube at a regular peripheral velocity;
(d) moving the furnace in a vertically upward direction along the processing tube for thermally processing the gel tube; and
(e) stopping the injection of the helium gas and moving the furnace to its initial position at a high velocity after thermally processing the gel tube.

8. The method of claim 7, further comprising a step of moving the gel tube assembly in a vertically upward direction within the processing tube for separating the gel tube assembly after performing the step (e).

9. The method of claim 7, wherein the step (b) is performed by injecting the helium gas into the processing tube upwardly from the bott0om thereof.

10. The method of claim 7, wherein the step (d) is performed by moving the furnace once in a vertically upward direction.
